Europäisches Patentamt

European Patent Office

Office européen des brevets

(11) Publication number: **0 095 150**
**A2**

(12) **EUROPEAN PATENT APPLICATION**

(21) Application number: **83104979.6**

(22) Date of filing: **19.05.83**

(51) Int. Cl.³: **B 32 B 27/08**
**B 65 D 65/40**

(30) Priority: **21.05.82 US 380595**

(43) Date of publication of application:
**30.11.83 Bulletin 83/48**

(84) Designated Contracting States:
**BE CH DE FR GB IT LI NL SE**

(71) Applicant: **THE DOW CHEMICAL COMPANY**
**Dow Center 2030 Abbott Road Post Office Box 1967**
**Midland Michigan 48640(US)**

(72) Inventor: **Bow, Kenneth Earl**
**443 Mainsail Drive**
**Westerville Ohio 43081(US)**

(72) Inventor: **Dooley, Joseph**
**1198 Green Valley Road**
**Heath Ohio 43055(US)**

(72) Inventor: **Romesberg, Floyd Eugene**
**9839 Mt. Vernon Rd., N.E.**
**St. Louisville Ohio 43071(US)**

(72) Inventor: **Rucker, Stephen Gary**
**209 Citation Dr.**
**Pataskala Ohio 43062(US)**

(72) Inventor: **Wong, Nang Chi**
**586 E. Warwick**
**Fresno California 93721(US)**

(74) Representative: **Hann, Michael, Dr. et al,**
**Patentanwälte Dr. Michael Hann Dr. H.-G. Sternagel**
**Marburger Strasse 38**
**D-6300 Giessen(DE)**

(54) **Improved multilayer polyamide film.**

(57) Multilayer films comprising a barrier layer of a polyamide polymer, an outer layer of an olefin polymer and an intermediate adhesive layer of a carboxyl-modified ethylenic polymer are provided improved processability and improved interlayer adhesion by incorporating a carboxyl-modified ethylenic polymer into said polyamide barrier layer. Surprisingly, substantial proportions (e.g., up to about 40 weight percent based upon the weight of said barrier layer) of the carboxyl-modified ethylenic polymer can be incorporated into said polyamide polymer barrier layer without significantly reducing the oxygen barrier properties thereof.

# IMPROVED MULTILAYER POLYAMIDE FILM

The present invention relates generally to multilayered thermoplastic polymer films containing at least one layer of a polyamide polymer. More specifically, the present invention relates to multilayered film structures (a) in which said polyamide polymer layer is in direct contact with, and is adhered to, an adjacent adhesive layer of a carboxyl-modified ethylenic polymer and (b) in which the properties of such film structure (e.g., processability and interlayer adhesion as between said polyamide layer and said adhesive layer) are substantially improved with little or no sacrifice in the oxygen barrier properties of the resulting film structure.

Multilayered polymer films containing a layer of a polyamide polymer are generally known in the art and are known to be potentially useful in a variety of packaging applications. For example, U.S. Patent 3,423,231 describes certain multiple layered polyamide film structures in which a layer of a polyamide polymer is adhered to at least one layer of a polyolefin polymer using an ethylene-acrylic acid copolymer as an adhesive layer therebetween. Certain preferred film structures

29,098-F

of this patent involve 4 or 5 layers or plies wherein both sides of the polyamide polymer layer are adhered to an adjacent ethylene-acrylic acid copolymer layer and wherein one or both of said ethylene-acrylic acid copolymer layers is (are) adhered to an adjacent outer layer of a normally solid olefin polymer such as polyethylene.

U.S. Patent 3,697,368 also discloses certain polyamide-polyethylene multilayered film structures. In accordance with the disclosure of this patent, coextruded films are provided in which a layer of a polyamide polymer has bonded to at least one of its surfaces a layered member which is either (1) an ethylene acidic polymer adhesive layer which is in turn bonded to a polyolefinic hydrocarbon outer layer; (2) a layer of a blend of from about 70 to 90 percent of an ethylene acidic polymer adhesive with from about 5 to about 30 percent of a polyolefinic hydrocarbon; or (3) an adhesive layer of a blend of the sort noted in item 2 which is in turn bonded to an outer layer of an olefinic hydrocarbon polymer such as polyethylene.

U.S. Patent 3,791,915 discloses certain multilayered polyamide-containing film structures as well. More specifically, such patent involves a heat sealable multiple layered structure in which a layer of a polyamide polymer is bonded to a layer of a polyolefinic hydrocarbon polymer (or a blend thereof with a zinc-neutralized ionic copolymer such as a zinc-neutralized copolymer of ethylene and methacrylic acid) using an intermediate adhesive layer of a zinc-neutralized copolymer of ethylene and an alpha,beta-ethylenically unsaturated carboxylic acid.

29,098-F

U.S. Patent 3,908,070 discloses certain multilayered thermoplastic polymer film structures which comprise an inner gas and/or water vapor barrier layer (e.g., acrylonitrile polymers or vinylidene chloride-based copolymers) which is bonded, via an intermediate layer of an adhesive composition, on one side to a polyolefin layer and on the other side to a nylon resin layer. In such structures, the intermediate adhesive compositions suggested are blends of adhesive polymers which are generally compatible with the polyolefin and barrier layers (e.g., ethylene/vinyl acetate copolymers, ethylene/ethyl acrylate copolymers, etc.) with other adhesive polymers which are generally compatible with the nylon layer (e.g., copolymers of ethylene with acrylic or methacrylic acid).

U.S. Patents 4,087,587 and 4,087,588 disclose that when certain high density polyethylene/unsaturated fused ring carboxylic acid anhydride graft copolymers (e.g., such as those of U.S. Patents 3,873,643 or 3,882,194) are blended with homopolymers of ethylene or with certain copolymers thereof, the resulting blend has excellent adhesion to nylon substrates. In a similar vein, U.S. Patent 4,230,830 discloses that certain blends of certain ethylenic homopolymers and copolymers with certain maleic anhydride grafted ethylenic polymers also exhibit excellent adhesion to nylon substrates.

U.S. Patent 4,233,367 discloses and claims certain coextruded multilayered film structures in which polymer blends of the sort described in U.S. Patents 4,087,587 and 4,087,588 are coextruded with nylon.

29,098-F

U.S. Patent 4,243,724 discloses multilayer film structures in which at least one layer of a linear polyamide polymer is bonded to an adjacent layer of a blend of a linear polyamide polymer with from about 2 to 40 weight percent of a hydrophilic substance compatible therewith such as, for example, saponified polyvinyl acetate.

Throughout the above-noted prior art references, a well-recognized problem has been the difficulty of achieving adequate adhesion between the polyamide layer and the other polymer layer or layers in the various multilayer polyamide-containing structures of interest therein. As such, those references have addressed themselves in large part to the development of polyamide-containing multilayered film structures having improved interlayer adhesion and, at least to some degree, progress has apparently been made by the prior art efforts in that regard. Nonetheless, it would still be desirable to provide even further improvement in the interlayer adhesion between the polyamide layer or layers and the remaining polymer layer or layers of multilayered polyamide-containing film structures of the sort discussed above and, as such, it is one object of the present invention to do so.

In addition to the foregoing, it has been observed by the present inventors that at least certain species of polyamide polymers can encounter or exhibit certain processing difficulties during coextrusion with olefin polymers such as polyethylene using conventional polyethylene cast film coextrusion equipment. Accordingly, another object of the present invention is to improve the cast film coextrusion processing characteristics of polyamide-containing multilayer film structures.

29,098-F

In accordance with the present invention, it has now been found that the extrusion processing characteristics of polyamide polymers can be substantially improved by incorporating (i.e., blending) a carboxyl-modified thermoplastic polymer of ethylene into the polyamide polymer. In addition, it has also been found that the inclusion of a minor proportion of such a carboxyl-modified thermoplastic polymer of ethylene into a major proportion of said polyamide polymer in a multiple layered polyamide-containing film structure provides substantially improved interlayer adhesion between the polyamide-containing polymer layer and an adhesive layer or layers of a carboxyl-modified thermoplastic polymer of ethylene positioned adjacent thereto (and in contact therewith)in said film structure. Further, it has also been found, quite surprisingly, that as much as about 40 weight percent (based upon the weight of the polyamide-containing layer) of said carboxyl-modified thermoplastic polymer of ethylene can be blended into the polyamide in said polyamide-containing layer without substantially reducing the oxygen barrier properties thereof (i.e., relative to the oxygen barrier properties of a comparable film structure employing a pure polyamide barrier layer therein).

The present invention, in one aspect, is a multilayer thermoplastic polymer film comprising: (a) a barrier layer which comprises, based upon the weight of said barrier layer, a blend of from 60 to 95 weight percent of a polyamide polymer and from 5 to 40 weight percent of a normally solid, carboxyl-modified thermoplastic polymer of ethylene; and an (b) adhesive layer adhered to at least one surface of the barrier

29,098-F

layer, said adhesive layer comprising at least a major proportion by weight of a normally solid, carboxyl--modified thermoplastic polymer of ethylene.

In another aspect, the present invention is an improvement in a multilayer thermoplastic polymer film structure in which a barrier layer of a polyamide polymer is bonded to a layer of a different thermoplastic polymer by means of an intermediate layer of said adhesive layer of carboxyl-modified thermoplastic polymer of ethylene wherein said improvement comprises the incorporation into (i.e., admixing or blending with) the polyamide polymer of said barrier layer from 5 to 40 weight percent, based upon the total weight of the resulting barrier layer blend composition, of a carboxyl-modified thermoplastic polymer of ethylene.

The multilayered thermoplastic polymer films of the present invention comprise at least two layers which are bonded together to form the integral film structure hereinbefore described. Optionally, a three-layered film structure is made up of (1) a barrier layer comprising a polyamide polymer blended with from 5 to 40 weight percent (based upon the total weight of said blend) of a carboxyl-modified thermoplastic polymer of ethylene, (2) an outer olefin polymer layer, and (3) an intermediate adhesive layer of a carboxyl-modified thermoplastic polymer of ethylene which is disposed between said barrier layer and said outer olefin polymer layer.

A wide range of variations of, or modifications to, the above-described basic three-layered structure can be made without departing from the spirit and scope

29,098-F

of the present invention. For example, a second adhesive layer of a carboxyl-modified thermoplastic polymer of ethylene can be adhered to the other side of the above-noted barrier layer to form a four-layer film having an A/B/A/O structure wherein A represents a layer of the above-noted carboxyl-modified adhesive polymer, B represents the aforementioned blended barrier layer and O represents an outer olefin polymer layer of the sort described hereinbefore. Similarly, for some end-uses it is desirable to employ a symetrical five-layer film having an O/A/B/A/O structure wherein the letters A, B and O continue to represent the types of polymer layers as set forth above.

In addition to the foregoing, it should be noted that it is not absolutely necessary for the purposes of the present invention that the three layers of the subject polymer films be directly adhered together in a barrier layer (B) to adhesive layer (A) to outer olefin layer (O) fashion. That is, in some instances, it can be advantageous to interpose additional thermoplastic polymer layers between the three types of layers. Thus, for example one can, if desired, beneficially interpose one or more layers of a polyamide/-carboxyl-modified ethylene polymer blend containing greater than 40 weight percent of said carboxyl-modified ethylene polymer in between the hereinbefore described required barrier and adhesive layers, B and A. In such fashion, one can generate a more gradual concentration gradient transition from the required barrier layer which has a minor proportion of a carboxyl-modified ethylenic adhesive polymer therein to the required intermediate adhesive layer which has at least a predominant proportion of such a carboxyl-modified ethylenic adhesive polymer contained therein.

29,098-F

In a similar manner, one or more additional polymer layers can also be interposed between the adhesive layer or layers, A, and the outer olefin polymer layer or layers, O, in the present film structures. In such instances, said additional polymer layer or layers can advantageously be blends comprising a carboxyl-modified thermoplastic polymer of ethylene (e.g., such as that employed in the intermediate adhesive layer(s), A) and an ethylene homopolymer or copolymer of the sort employed in the outer olefin polymer layer(s), O. In this way, one can, if desired, generate a more gradual compositional transition from the intermediate carboxyl-modified ethylenic adhesive polymer layer(s), A, to the outer olefin polymer layer(s), O. Alternatively, one can, if desired, generate a gradual transition in terms of carboxyl concentration in going from the adhesive layer(s), A, to the outer olefin polymer layer(s), O, (e.g., going from a relatively higher carboxyl content in the areas immediately adjacent the adhesive layer, A, to a relatively lower carboxyl content in the area immediately adjacent the olefin polymer layer(s), O), by interposing additional layers of appropriately selected carboxyl-modified ethylenic adhesive polymers having differing degrees of carboxyl group content (e.g., relatively higher in layers placed nearer the adhesive layer(s), A, and relatively lower in layers nearer the outer olefin polymer layer(s), O).

Related to the foregoing, one embodiment of the present invention entails the recycle of scrap materials generated in the film-making process (e.g., edge trimmings and the like) and utilizing said recycled materials as one or more additional layer or layers within the film structures hereof. Naturally, when the

29,098-F

indicated material to be recycled is derived from film structures wherein the polyamide-containing barrier constitutes a large or majority portion of the film thickness, said recycle will contain relatively large or significant proportions of polyamide therein. In such instances, the recycle layer or layers will preferably be placed between the above-described barrier layer, B, and the adjacent adhesive layer(s), A. On the other hand, if the polyamide content of any such recycle is relatively small and the ethylene homopolymer or copolymer content (e.g., of the recycled film's outer olefin polymer layer(s)) is relatively high, then the indicated recycle layer(s) will preferably be placed between an adhesive layer, A, and its adjacent outer olefin polymer layer, O.

As an alternative embodiment, scrap recycle can instead be blended in minor proportions into one or more of the above-specified B, A or O layers rather being employed as a separate, additional layer thereof in the subject film structures. Naturally, if the material to be recycled is composed predominantly of polyamide, then it will preferably be blended into the barrier layer, B. On the other hand, if such recycle is composed predominantly of the olefin polymer of the outer layer, O, then it will preferably be incorporated into the outer, O, layer or layers. Similarly, when the material to be recycled is predominantly composed of adhesive resin from the adhesive layer, A, then it will preferably be incorporated into the adhesive layer or layers, A.

Polyamide polymers suitably employed in the above-described barrier layer in the practice of the

29,098-F

present invention include any of the well-known class of polyamide polymers which are commonly referred to as "nylon" and which are capable of extrusion to form single or multiple layered film structures. Exemplary of such nylon resins are nylon-6 (polycaproamide), nylon-6,6 (polyhexamethylene odipamide), nylon-6,10, nylon-10, nylon-11, etc. Particularly beneficial for use in such barrier layer is Allied Chemical Corporation's Capron XTRABOND 100F nylon resin.

Carboxyl-modified thermoplastic polymers of ethylene which are suitably blended with the above-described polyamide polymers in the barrier layer of the present film structures are preferably random copolymers of a major proportion of ethylene with a minor proportion of an ethylenically unsaturated carboxylic acid monomer such as, for example, acrylic acid, methacrylic acid, crotonic acid, fumaric acid, maleic acid, itaconic acid, maleic anhydride, monomethyl maleate, monoethyl maleate, monomethyl fumarate, monoethyl fumarate and the like; with random copolymers of a major proportion of ethylene with a minor proportion of acrylic or methacrylic acid being especially preferred. Typically, such random ethylene/unsaturated carboxylic acid copolymers have from 1 to 30, preferably from 2 to 20, and most preferably from 6 to 12 weight percent (based on the total weight of said copolymer) of such ethylenically unsaturated carboxylic acid monomer copolymerized therein. Optionally, such copolymers can further have copolymerized therein a minor proportion (e.g., up to about 25 weight percent based upon the weight of said copolymer) of other monomers which are copolymerizable with ethylene such as, for example, esters of acrylic or methacrylic acid (e.g., ethyl

29,098-F

acrylate, methyl methacrylate, 2-hydroxyethyl acrylate, n-butyl acrylate, etc.), vinyl esters of saturated carboxylic acids (e.g., vinyl acetate, vinyl propionate, vinyl butyrate, etc.) and the like. Further, such random ethylene/unsaturated carboxylic acid copolymers can also optionally be employed in partially neutralized metallic salt form. (See, for example, U.S. Patents 3,791,915 and 3,264,272.)

Typically, the aforementioned random ethylene/-unsaturated carboxylic acid copolymers employed herein will be of the relatively low melt index variety such as, for example, those having a melt index of 6 decigrams per minute or less as determined pursuant to ASTM D-1238, Condition E. Preferably such random ethylene/-unsaturated carboxylic acid copolymers have a melt index of 2 decigrams per minute or less as determined in accordance with the indicated ASTM test procedure.

Suitable carboxyl-modified thermoplastic polymers of ethylene for use in the aforementioned polyamide barrier blend layer also include homopolymers and copolymers of ethylene (e.g., copolymers of a major proportion of ethylene with a minor proportion of a higher, e.g., C3 to about C12, alpha-olefin and/or an ethylenically unsaturated ester monomer such as, for example, vinyl acetate, ethyl acrylate, etc.) which have been grafted with a carboxyl-containing monomer such as maleic anhydride or unsaturated fused ring (e.g., polycyclic) carboxylic acid anhydride compounds. Such graft-modified carboxyl-containing ethylenic polymer may be employed as such in the aforementioned polyamide-containing barrier layer blends or they may be employed in conjunction with (i.e., in the form of a precursor blend) with an ethylene homopolymer or copolymer (e.g., such as the aforementioned copolymers of a major proportion of ethylene with a minor proportion of a higher alpha-olefin and/or an ethylenically unsaturated ester monomer) which has not been graft modified with such a carboxyl-containing monomer. A more detailed description of such graft modified carboxyl-containing ethylenic polymers, and of blends thereof with non--modified ethylenic polymers, can be found in U.S. Patents 4,230,830; 3,873,643; 3,882,194; 4,087,587 and 4,087,588, the pertinent teachings of which are hereby incorporated by reference herein.

For the purposes of the present invention, when a blend of a graft-modified carboxyl-containing ethylenic polymer with a non-modified ethylenic polymer is employed in the subject polyamide-containing blended barrier layer or in an intermediate adhesive layer, the resulting modified/non-modified ethylenic polymer blend combination is treated for quantitative and qualitative purposes as if it were a single graft modified carboxyl--containing ethylenic polymer component.

When the aforementioned graft-modified carboxyl-containing ethylenic polymers are employed in the polyamide-containing barrier layer of the subject film structures, it is typically desirable that the species thereof employed have a melt index of 6 decigrams/minute or less and preferably such graft copolymers have a melt index of 2 decigrams/minute or less, said melt index being determined pursuant to ASTM D-1238, Condition E.

29,098-F

As has been previously noted, the polyamide-containing barrier layer of the present multilayer film structure contains, based upon the total weight of said barrier layer, from 5 to 40 weight percent of the hereinbefore discussed carboxyl-modified thermoplastic polymer of ethylene. Preferably such carboxyl-modified ethylenic polymer constitutes from 5 to 30 weight percent of said barrier layer and·most preferably such carboxyl-modified ethylenic polymer constitutes from 10 to 25 weight percent thereof.

While not particularly critical for the purposes of the present invention, the above-discussed polyamide-containing barrier layer typically constitutes from 5 to 80 percent of the total thickness of the multilayered film structures of concern herein. Preferably said polyamide-containing barrier layer constitutes from 10 to 50 percent of the total thickness of said multilayered film structure and most preferably from 10 to 35 percent of the total thickness thereof.

Suitable carboxyl-modified thermoplastic polymers of ethylene for use as the outer or intermediate adhesive layer or layers of the present multilayer film structures include those which have been previously discussed as being suitable for blending into the hereinbefore described polyamide-containing barrier layer. Here again, it is generally desirable to empoly those carboxyl-modified ethylenic polymers which are of a relatively high molecular weight (e.g., having a melt index of 6 decigrams per minute or less, preferably less than or equal to 2 decigrams per minute, as determined pursuant to ASTM D-1238, Condition E). In addition, it is also generally preferred to use the above-discussed

29,098-F

random copolymers of a major proportion of ethylene with a minor proportion of an ethylenically unsaturated carboxylic acid monomer as the carboxyl-modified ethylenic polymer in such intermediate adhesive layer or layers.

Typically, the thickness of the individual adhesive layer or layers employed will correspond to from 5 to 20, preferably from 5 to 15, percent of the overall thickness of the subject multilayer film structures.

The outer olefin polymer layer or layers of the present multilayered film structures comprise an ethylene homopolymer (e.g., low, medium or high density polyethylene with low density polyethylene being preferred) or a copolymer of a major proportion of ethylene with a minor proportion of a higher (e.g., C3-C12) alpha-olefin and/or an ethylenically unsaturated ester monomer such as, for example, esters of ethylenically unsaturated monocarboxylic acids (e.g., ethyl acrylate, methyl methacrylate, 2-hydroxyethyl acrylate, 2-ethyl hexyl acrylate, n-butyl acrylate, etc.); vinyl esters of saturated carboxylic acids (e.g., vinyl acetate, vinyl propionate, vinyl butyrate, etc.); and the like.

When the multilayered film structures of the present invention are in their simplest form (i.e., the basic 2- or 3-layered structure), the thickness of the outer olefin polymer layer employed will typically correspond to from 10 to 90 percent of the overall film thickness. On the other hand, when a more complicated or sophisticated version of the present film structures is employed (e.g., such as a symetrical five-layered O/A/B/A/O structure), the thickness of the individual olefin polymer outer layer or layers will typically constitute from 10 to 50, preferably from 10 to 35, percent of the total film thickness.

With regard to each of the hereinabove--described individual layers (i.e., the polyamide/-carboxyl-modified ethylenic polymer blend barrier layer; the carboxyl-modified ethylenic polymer intermediate adhesive layer; and the outer olefin polymer layer), it should be understood that additional ingredients and additives can optionally be incorporated therein over and above those polymeric components which have been specified previously. Thus, for example, known fillers, pigments, antistatic additives, stabilizers, and the like, can be incorporated into any or all of the various individual layers if desired. Further, additional polymeric ingredients can also be employed in minor proportions in the various individual layers so long as the requisite polymeric ingredients specified above continue to constitute at least a predominant proportion of the individual layer for which its use is specified.

The overall thickness of the multilayered film structures of the present invention is not particularly critical. However, as a general rule such films will have a total thickness of from 0.5 to 12 mils and, more typically, of from 0.5 to 5 mils. Of particular interest for some end-use applications are those multilayered films hereof which are from 1 to 5 (preferably from 1 to 3) mils in thickness.

The multilayered film structures of the present invention may be prepared by a variety of known

29,098-F

manufacturing techniques. For example, individual single layer or multiple layered structures, representing a portion of the multilayer structure to be ultimately prepared, can be preformed by means of conventional extrusion techniques (e.g., by blown film techniques, slot die extrusion, etc.) and can then be laminated together in an appropriate fashion to arrive at the final multilayer film structure desired. However, the present multilayer film structures are preferably prepared in a single extrusion operation utilizing known blown or cast (preferably cast) film coextrusion techniques. In the case of the indicated cast film coextruded products, they can be suitably prepared by multimanifold slot die coextrusion but are preferably prepared using a simple slot die with a combining adaptor.

The multilayered film structures of the present invention are characterized by having an excellent combination of oxygen barrier properties, heat sealability, printability, toughness and impact strength. As such, they can be suitably employed in a variety of end-use applications such as, for example, in the packaging of food items (e.g., cereal, cheese, meat, seafood, cake and cookie mixes, etc.) and in the packaging of non-food items (e.g., fertilizer, pesticides, medical and pharmaceutical materials, etc.) as well as in various industrial applications (e.g., as drum liners, in thermoformable packaging uses, as sheet molding compound carrier webs, and the like).

The present invention is further illustrated by the following examples in which parts and percentages are on a weight basis unless otherwise indicated.

29,098-F

Example 1 -- Impact of Ethylene/Acrylic Acid
         Copolymer Blended into Polyamide Core
         Layer Upon Interlayer Adhesion

A series of 63.5 micron (2.5 mil) thick 3-layer, A/B/A, coextruded cast film structures are prepared having a core layer, B, which is approximately 10 micron (0.4 mil) thick and which is at least predominantly composed of a polyamide polymer (i.e., Allied Chemical's Capron XTRABOND 100F nylon resin) and two outer skin layers, B, which are at least predominantly composed of a random ethylene/acrylic acid copolymer having an acrylic acid content of 6.5 weight percent and a melt index of 2 as determined pursuant to ASTM D-1238, Condition E.

The interlayer adhesion between the core layer and the skin layers for each of these various film structures is determined by a 180° peel adhesion test procedure in which 2 strips [at least 12.7 cm (5 inches) long and 2.54 cm (1 inch wide)] of a film test specimen (selected from 5 representative areas across the entire width of the film web and taken in both machine and transverse direction and carefully cut from said web to prevent nicks and tears in the edges of the specimens) are adhered to an adhesive tape backing material and the resulting adhesive tape backed test specimen strips are then heat sealed together (film specimen side-to-film specimen side) using a Sentinel Model 12A heat sealer set at a temperature of 115.6°C (240°F), an air pressure of 1.4 kg/cm² (20 psi) and a dwell time of 2 seconds. After the resulting heat sealed test specimens have cooled, the 180° peel seal strength thereof is determined, in kg/cm (lbs/inch) of sample width, with an Instron Tensile Tester using a

29,098-F

5.08 cm (2 inch) grip separation and a cross-head speed of 50.4 cm/min (20 inches/minute).

Interlayer adhesion values are determined in the foregoing manner for each of five representative areas across the film web and the Interlayer Adhesive value reported is the average of those five adhesion value results.

The specific polymeric composition and structural details of these various film structures are summarized in Table I along with the interlayer adhesion values which are attained therewith.

29,098-F

## TABLE I

Effect of Ethylene/Acrylic Acid Copolymer Being Blended into Polyamide Core Layer

| Sample Number | Film Structure | | Interlayer Adhesion Newton/met(N/m) (lbs/inch of sample width) | |
|---|---|---|---|---|
| | Core Composition | Skin Compositions | | |
| 1A | 100% Nylon[1] | 100% EAA[2] | 1086 | (6.2) |
| 1B | 90% Nylon[1]/10% EAA[2] | 100% EAA[2] | 1453 | (8.3) |
| 1C | 80% Nylon[1]/20% EAA[2] | 100% EAA[2] | 1400 | (8.0) |
| 1D | 90% Nylon[1]/10% EAA[2] | 90% EAA[2]/10% LLDPE[3] | 1488 | (8.5) |
| 1E | 100% Nylon[1] | 75% EAA[2]/25% LLDPE[3] | 981 | (5.6) |
| 1F | 90% Nylon/10% EAA[2] | 70% EAA[2]/30% LLDPE[3] | 1296 | (7.4) |

[1]  The nylon employed is marketed by Allied Chemical as CAPRON XTRABOND 100F.
[2]  EAA = Random ethylene/acrylic acid copolymer having a melt index of 2.5; an acrylic acid content of 6.5 weight percent and marketed by The Dow Chemical Company as EAA 452.
[3]  LLDPE = Ethylene/octene copolymer having a melt index of 1.0 and marketed by The Dow Chemical Company as DOWLEX Brand Linear Low Density Polyethylene (LLDPE) 2045.

As can be seen from the data in Table I, the incorporation of a small amount (e.g., 10 or 20 weight percent) of the random ethylene/acrylic acid copolymer into the polyamide core layer substantially improves the interlayer adhesion between said core layer and the adjacent ethylene/acrylic acid copolymer layers. (Compare the adhesion data for Sample 1A with that for Samples 1B and 1C.) Similarly, it can also be seen that some degree of improved adhesion is also obtained when the skin layers adjacent to the polyamide core layer are composed of a blend of a major amount of said ethylene/acrylic acid (EAA) copolymer with a minor proportion of linear low density polyethylene instead of being composed solely of said EAA copolymer. (Compare the adhesion data for Sample 1D with that for Sample 1B. Also compare the adhesion data for Sample 1F with that for Sample 1E.)

Example 2 -- Impact of Ethylene/Acrylic Acid Copolymer Blended into Polyamide Core Layer Upon Oxygen Barrier Properties

A series of 38 to 66 micron (1.5 to 2.6 mil) thick 3-layer, A/B/A, coextruded cast film structures are prepared having two outer skin layers, A, which are composed of the EAA 452 ethylene/acrylic acid copolymer resin noted in Table I above or of a 5.5 melt index, 6.5 weight percent acrylic acid containing ethylene/-acrylic acid copolymer (EAA 455) and having a 0.15 to 0.85 mil thick core layer, B, which is composed of either Allied Chemical's Capron XTRABOND 100F nylon resin or a blend of a major proportion thereof with a minor proportion of said EAA 452 or 455 resin.

29,098-F

The resulting film structures are then tested to determine their oxygen barrier characteristics in accordance with ASTM D-3985-81.

A description of the polymeric compositions of the various film structures and the oxygen barrier properties thereof are summarized in Table II..

29,098-F

## TABLE II

### Effect of Ethylene/Acrylic Acid Copolymer Being Blended Into Polyamide Core

| Sample Number | Film Structure | | Oxygen Transmission cc-micron/m²/24 hr (cc-mil/100 in²/24 hr) | |
|---|---|---|---|---|
| | Core Composition | Skin Composition | | |
| 2A | 100% Nylon[1] | 100% EAA[2] | 7.2 | (4.4) |
| 2B | 95% Nylon[1]/5% EAA[2] | 100% EAA[2] | 8.2 | (5.0) |
| 2C | 90% Nylon[1]/10% EAA[2] | 100% EAA[2] | 10.0 | (6.1) |
| 2D | 80% Nylon[1]/20% EAA[2] | 100% EAA[2] | 10.2 | (6.2) |
| 2E | 70% Nylon[1]/30% EAA[2] | 100% EAA[2] | 11.3 | (6.9) |
| 2F | 60% Nylon[1]/40% EAA[2] | 100% EAA[2] | 17.0 | (10.4) |
| 2G | 50% Nylon[1]/50% EAA[2] | 100% EAA[2] | 46.5 | (28.4) |
| 2H | 40% Nylon[1]/60% EAA[2] | 100% EAA[2] | 120.6 | (73.6) |

[1] The nylon employed is marketed by Allied Chemical as CAPRON XTRABOND 100F.
[2] The EAA is a random ethylene/acrylic acid copolymer having a melt index of either 2.5 or 5.5 and an acrylic acid content of 6.5 weight percent. It is marketed by The Dow Chemical Company either as EAA 452 or as EAA 455, respectively.

As can be seen from the data in Table II, the addition of the ethylene/acrylic acid (EAA) copolymer in 5 or 10 weight percent increments to the polyamide core layer causes only a fairly gradual increase in the resulting film structure's oxygen transmission characteristics until the levels thereof in said core layer reach 30 or 40 percent by weight of said core layer. (See the Oxygen Transmission data for Samples 2A through 2F.) After that point, however, further increases in the EAA copolymer content in said core layer (i.e., to levels of 50 or 60 weight percent on a total core layer weight basis) brings about substantial incremental increases in the oxygen transmission characteristics of the resulting film structures.

Example 3 -- Coextruded Five-Layer Film Structures

A series of 5-layer, O/A/B/A/O, coextruded cast film structures are prepared having 2 outer skin layers, O, of certain polyethylene compositions, a centrally located nylon-containing barrier layer, B, and two intermediate adhesive layers, A, which are composed of random ethylene/acrylic acid copolymer. The specific compositional details of such film structures and a summary of the properties thereof are presented in Table III.

29,098-F

## TABLE III

### Five Layer Film Structures and Properties Thereof

| Sample Number | Barrier Layer, B | | Adhesive Layer | | Outer Layer | |
| | Polymer Composition | Percent Of Total Film Thickness | Polymer Composition | Individual Percent Of Total Film Thickness | Polymer Composition | Individual Percent Of Total Film Thickness |
| --- | --- | --- | --- | --- | --- | --- |
| 3A | 80% Nylon[1] 20% EAA[2] | 20% | 100% EAA[2] | 10% | 100% LDPE[3] | 30% |
| 3B | 90% Nylon[1] 10% EAA[2] | 20% | 100% EAA[2] | 10% | 100% LLDPE[4] | 30% |

(continued)

TABLE III (Continued)

Five Layer Film Structures and Properties Thereof

| Sample Number | Yield Tensile Strength[5] kg/cm² (psi) | | | | Ultimate Tensile Strength[5] kg/cm² (psi) | | | | Percent Elongation[5] | |
| | Machine Direction | | Transverse Direction | | Machine Direction | | Transverse Direction | | Machine Direction | Transverse Direction |
| --- | --- | --- | --- | --- | --- | --- | --- | --- | --- | --- |
| 3A | 111 | (1590) | 113 | (1610) | 319 | (4560) | 208 | (2970) | 400 | 600 |
| 3B | 108.5 | (1550) | 94 | (1340) | 298 | (4260) | 204 | (2910) | 425 | 380 |

[1] The nylon employed is Allied Chemical's CAPRON XTRABOND 100F.
[2] The EAA employed is The Dow Chemical Company's EAA 452 (random ethylene/acrylic acid copolymer) having a melt index of 2 and an acrylic acid content of 6.5 weight percent.
[3] The LDPE is a low density polyethylene resin having a melt index of 1.9 dg/min and a density of 0.9245 g/cc (marketed by The Dow Chemical Company as LDPE 535).
[4] LLDPE = Ethylene/octene copolymer marketed by The Dow Chemical Company as DOWLEX Brand Linear Low Density Polyethylene (LLDPE) 2047.
[5] Determined pursuant to ASTM D-882-79B.

29,098-F

0095150

**0095150**

While the present invention has been herein described and illustrated by reference to certain embodiments and examples thereof, it should nonetheless be understood that such is not to be interpreted as in any way limiting the scope of the presently claimed invention.

29,098-F

1.  A multilayer thermoplastic polymer film comprising:  (a) a barrier layer which comprises, based upon the weight of said barrier layer, a blend of from 60 to 95 weight percent of a polyamide polymer and from 5 to 40 weight percent of a normally solid, carboxyl-modified thermoplastic polymer of ethylene; and an (b) adhesive layer adhered to at least one surface of the barrier layer, said adhesive layer comprising at least a major proportion by weight of a normally solid, carboxyl-modified thermoplastic polymer of ethylene.

2.  The polymer film of Claim 1 including at least one outer olefin polymer layer adhered to the surface of the adhesive layer or layers opposite to the surface of said adhesive layer which is adhered to the barrier layer, said olefin polymer layer comprising an ethylene homopolymer or a copolymer of a major proportion of ethylene with a minor proportion of a higher alpha-olefin monomer or an ethylenically unsaturated ester monomer.

3.  The polymer film of Claim 1 or 2 wherein the carboxyl-modified thermoplastic polymer of ethylene in the barrier layer and in the adhesive layer is a random copolymer of a major proportion of ethylene with a minor proportion of an ethylenically unsaturated carboxylic acid monomer.

29,098-F

4.  The polymer film of Claim 1 or 2 wherein the carboxyl-modified thermoplastic polymer of ethylene in the barrier layer and in the adhesive layer is a homopolymer or copolymer of ethylene which has been graft copolymerized with a monomer containing carboxylic acid or anhydride moieties thereon.

5.  The polymer film of Claim 2, 3 or 4 wherein the outer olefin polymer layer comprises low density polyethylene.

6.  A polymer film according to Claim 2 which comprises two outer olefin polymer layers, one barrier layer located between said olefin polymer layers and two intermediate adhesive layers, one of which is disposed between one side of said barrier layer and the outer olefin polymer layer on the same side thereof and the other of which is disposed between the other side of said barrier layer and its corresponding outer olefin polymer layer.

7.  A polymer film according to Claim 6 further comprising at least one additional polymer layer (1) which is disposed either between the barrier layer and an adjacent adhesive layer or between an adhesive layer and its adjacent outer olefin polymer and (2) which comprises a blend of (a) a polyamide polymer, (b) a normally solid, carboxyl-modified thermoplastic polymer of ethylene, and (c) an ethylene homopolymer or a copolymer of a major proportion of ethylene with a minor proportion of a higher alpha-
-olefin monomer or an ethylenically unsaturated ester monomer.

8. The polymer film of Claim 7 wherein said additional polymer layer is composed predominantly of an ethylene homopolymer or of a copolymer of a major proportion of ethylene with a minor proportion of a higher alpha-olefin monomer or an ethylenically unsaturated ester monomer.

9. The polymer film of Claim 1 wherein the barrier layer constitutes from 5 to 90 percent of the total film thickness.

10. The polymer film of Claim 1 wherein the total thickness thereof is from 0.5 to 12 mils.